# FASCICULE DE BREVET EUROPEEN

(11) **EP 2 102 480 B1**
(45) Date de publication et mention de la délivrance du brevet: **31.10.2012**
(21) Numéro de dépôt: 07870298.2
(22) Date de dépôt: 19.11.2007
(51) Int. Cl.: F02K 1/72, F02K 1/76

(54) **INVERSEUR DE POUSSÉE À GRILLES TRANSLATABLES POUR MOTEUR À RÉACTION**
VERSCHIEBBARER KASKADEN-SCHUBUMKEHRER FÜR EIN DÜSENTRIEBWERK
TRANSLATABLE CASCADE THRUST REVERSER FOR JET ENGINE

(30) Priorité: 15.01.2007 FR 0700249
(43) Date de publication de la demande: 23.09.2009
(73) Titulaire: Aircelle, 76700 Gonfreville l'Orcher (FR)
(72) Inventeur: HILLEREAU, Nicolas, F-76600 Le Havre (FR); COLLIER, Jérôme, F-76600 Le Havre (FR); VAUCHEL, Guy, Bernard, F-76600 Le Havre (FR)
(74) Mandataire: Gaillarde, Frédéric F. Ch.
(86) Numéro de dépôt international: PCT/FR2007/001892
(87) Numéro de publication internationale: WO 2008/087261

(56) Documents cités:
- EP-A1- 1 413 734
- WO-A-2006/134253
- US-A- 3 511 055
- US-B1- 6 227 485
- US-B1- 6 625 972

## Description

La présente invention se rapporte à un inverseur de poussée pour moteur à réaction.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval intégrant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur.

Une structure commune d'inverseur de poussée est décrite dans WO 2006/134 253, EP 1 413 734 et US 3 511 055 et comprend un capotage dans lequel est ménagée une ouverture destinée au flux dévié qui, en situation de poussée directe des gaz, est fermée par un capot coulissant et qui, en situation d'inversion de poussée, est dégagée par déplacement en translation vers l'aval (par référence au sens d'écoulement des gaz) du capot coulissant, au moyen de vérins de déplacement du capot coulissant, lesdits vérins de déplacement étant montés sur un cadre du capotage en amont de l'ouverture.

Le capot coulissant est le plus souvent formé de deux demi-capots, de forme sensiblement hémicylindrique, qui sont articulés en partie supérieure (à 12 heures) sur des charnières parallèles à la direction de translation du capot coulissant, et qui sont fermés par des verrous en partie inférieure (à 6 heures).

Cette disposition permet, pour des opérations de maintenance, d'accéder au moteur ou à une structure interne de l'inverseur en ouvrant les demi-capots.

La présente invention se propose de permettre, pour la maintenance, d'ouvrir le capot coulissant plus simplement par le biais d'une surcourse de translation vers l'aval.

Cependant, les vérins de déplacement du capot coulissant sont déployés au maximum en situation d'inversion de poussée, et ne peuvent donc autoriser une telle surcourse vers l'aval. Du reste, même si cela était possible, les vérins gêneraient l'accès au moteur lors de la maintenance.

La présente invention vise à éviter ces inconvénients et consiste, à cet effet, en un Inverseur de poussée à grilles pour turboréacteur destiné à former au moins une partie d'une section aval d'une nacelle abritant le turboréacteur, comportant un cadre avant destiné à être rattaché à une partie fixe de la nacelle et supportant, d'une part, des vérins d'actionnement en translation d'au moins un capotage mobile, et d'autre part, des grilles d'inversion de poussées périphériques, caractérisé en ce que le cadre avant comprend une partie fixe destinée au rattachement du cadre avant à la partie fixe de la nacelle et supportant les grilles de déviation, et une partie montée mobile en translation le long d'un axe longitudinal de la nacelle et sur laquelle est fixée une extrémité des vérins d'actionnement du capotage, les parties fixes et mobile du cadre avant étant aptes à être liées entre elles de manière détachable par des moyens de verrouillage.

Ainsi, les parties fixe et amovible du cadre du capotage sont rattachées en configuration de fonctionnement de l'inverseur, mais peuvent être détachées pour permettre une translation de la partie amovible du cadre du capotage avec le capot coulissant vers l'aval jusque dans une configuration de maintenance dans laquelle un accès est ainsi ouvert au moteur et à la structure interne de l'inverseur.

Les vérins de déplacement du capot coulissant ne gênent pas l'accès au moteur lors de la maintenance puisqu'ils se déplacent avec la partie amovible du cadre du capotage sur laquelle ils sont fixés et le capot coulissant.

La translation de l'ensemble formé par le capot coulissant et la partie amovible du cadre de capotage peut être réalisée manuellement, ou le capotage peut être équipé de moyens d'entraînement en translation de l'ensemble formé par le capot coulissant et la partie amovible du cadre de capotage. Ces moyens d'entraînement en translation sont par exemple du type à pignon et crémaillère.

Avantageusement, les grilles de déviation sont supportées par l'intermédiaire d'un treillis.

De manière préférentielle, le capotage est équipé de moyens d'entraînement en translation de l'ensemble formé par le capot coulissant et la partie amovible du cadre de capotage. Ces moyens pourront être des moyens d'entraînement manuel, tels que des poignées, ou mécaniques. De manière préférentielle, les moyens d'entraînement en translation sont du type à pignon et crémaillère.

Selon une possibilité, au moins un couple de connecteurs mâle et femelle est prévu sur le cadre du capotage, l'un solidaire de la partie fixe et l'autre de la partie amovible du cadre du capotage, de sorte que lesdits connecteurs mâle et femelle atteignent une position de mutuelle correspondance, voire de connexion, lorsque l'ensemble formé par le capot coulissant et la partie amovible du cadre de capotage est engagé en configuration de fonctionnement.

Lesdits connecteurs mâle et femelle peuvent être disposés parallèlement à la direction de translation de l'ensemble formé par le capot coulissant et la partie amovible du cadre de capotage, de sorte que le dégagement ou l'engagement en configuration de fonctionnement de cet ensemble s'accompagne respectivement d'une déconnexion ou d'une connexion entre lesdits connecteurs mâle et femelle.

L'un au moins parmi lesdits connecteurs mâle et femelle est par exemple équipé de moyens de guidage en translation parallèlement à la direction de translation de l'ensemble formé par le capot coulissant et la partie amovible du cadre de capotage.

Afin qu'aucun fluide n'y rentre durant les opérations de maintenance, le connecteur femelle peut être équipé de portes de protection étanche susceptibles de pivoter automatiquement entre, respectivement, une position fermée et une position ouverte selon que l'ensemble formé par le capot coulissant et la partie amovible du cadre de capotage est, respectivement, dégagé ou engagé en configuration de fonctionnement.

Les connecteurs mâle et femelle peuvent aussi être disposés perpendiculairement à la direction de translation de l'ensemble formé par le capot coulissant et la partie amovible du cadre de capotage, et l'un ou l'autre desdits connecteurs mâle et femelle être monté mobile en translation axiale au fond d'un logement prévu pour une goupille de liaison entre les parties fixe et amovible du cadre du capotage, de sorte que la goupille, engagée dans son logement, vienne en appui contre ledit connecteur de manière à le pousser vers une position basse de connexion, ledit connecteur étant lié à la partie fixe du cadre du capotage et rappelé dans une position haute en retrait par l'intermédiaire de moyens élastiques de rappel. Cette disposition peut permettre de vérifier automatiquement le bon engagement de la goupille de liaison dans son logement en vérifiant le contact électrique du connecteur. Par exemple, un calculateur correspondant peut être programmé pour tester, au démarrage de l'avion, la continuité électrique de chacun des câbles mis en jeu. Si le résultat est positif, cela signifie que le connecteur est bien engagé ainsi que la goupille.

Pour ne pas gêner les opérations de maintenance, la partie fixe du cadre de capotage, ou une partie de ce cadre, peut être montée pivotante, autour d'une charnière parallèle à la direction de translation du capot coulissant, entre une position fermée et une position déployée de maintenance.

La mise en oeuvre de l'invention sera mieux comprise à l'aide de la description détaillée exposée ci-dessous en regard du dessin annexé.
La figure 1 est une représentation schématique d'une nacelle selon l'invention présentant des capots aval en position de fermeture.
La figure 2 est une représentation de la nacelle de la figure 1 avec ses capots aval en position intermédiaire d'inversion de poussée.
La figure 3 est une représentation de la nacelle de la figure 1 avec ses capots aval en position totalement ouverture pour la réalisation d'opérations de maintenance.
La figure 4 est une vue partielle schématique de principe, dans un plan de coupe longitudinale, d'un inverseur de poussée selon l'invention.
La figure 5 est une vue analogue à la figure 1 dans une configuration de fonctionnement de l'inverseur en situation de poussée directe.
La figure 6 est une vue analogue à la figure 2 dans une configuration de maintenance de l'inverseur.
La figure 7 est une vue schématique partielle en perspective de l'inverseur qui illustre des moyens d'entraînement en translation d'un ensemble amovible pour la maintenance de l'inverseur.
La figure 8 est une vue de dessus schématique qui représente un couple de connecteurs mâle et femelle prévu à l'interface entre l'ensemble amovible pour la maintenance de la figure 4 et une partie fixe de l'inverseur.
Les figures 9 et 10 sont deux vues schématiques en coupe transversale dans le plan d'une goupille de liaison de la figure 1, qui montrent respectivement la goupille hors de son logement et engagée dans son logement.

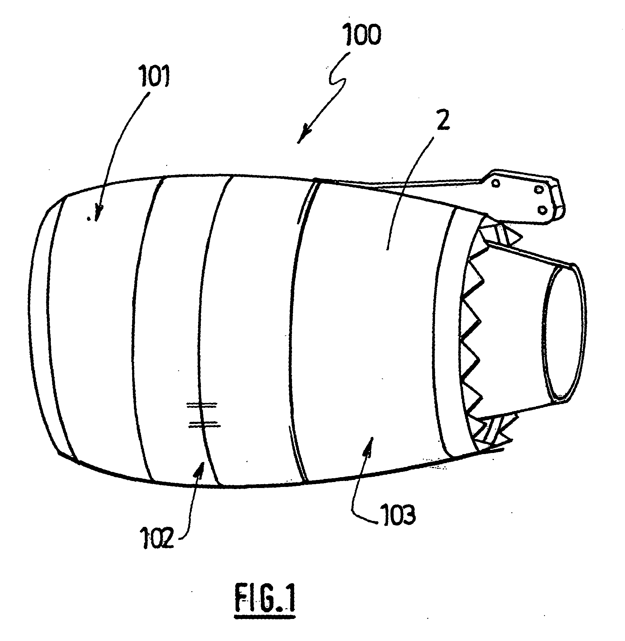

Les figures 1 à 3 représentent une nacelle 100 pour turboréacteur double flux.

La nacelle 100 constitue un logement tubulaire pour un turboréacteur double flux (non visible) et sert à canaliser les flux d'air qu'il génère par l'intermédiaire des pâles d'une soufflante (non visible), à savoir un flux d'air chaud traversant une chambre de combustion du turboréacteur, et un flux d'air froid circulant à l'extérieur du turboréacteur.

La nacelle 100 possède une structure comprenant une section avant 101 formant une entrée d'air, une section médiane 102 entourant la soufflante du turboréacteur, et une section arrière 103 entourant le turboréacteur.

La section arrière 103 comprend, d'une part, une structure externe intégrant un système d'inversion de poussée formant également une tuyère d'éjection, et d'autre part, une structure interne 104 de carénage du turboréacteur définissant avec la structure externe une veine destinée à la circulation du flux froid.

La structure externe et son système d'inversion de poussée, illustré sur les figures 1 à 7, comprennent, d'une part, un cadre avant 105 destiné à assurer la liaison de la structure aval externe avec la partie médiane 102, ledit cadre avant 105 supportant également un treillis 106 périphérique sur lequel sont montées des grilles 5 d'inversion de poussée, et d'autre part, un capotage 2 monté mobile en translation vers l'aval de la nacelle.

Le capot 2, dit « transcowl », est monté coulissant sur le cadre avant 105 au moyen de rails de guidage (non représentés), et ferme cette ouverture à grilles 5 en situation de poussée directe des gaz.

En situation d'inversion de poussée, le capot coulissant 2 est déplacé en translation vers l'aval (par référence au sens d'écoulement des gaz) par des vérins 6, montés sur le cadre du capotage en amont de l'ouverture à grilles 5, de manière à dégager ladite ouverture à grilles 5.

Selon l'invention, le cadre avant comprend une partie fixe 3, liée rigidement à une structure fixe de la nacelle 100, telle que le turboréacteur ou la section médiane 102, et une partie mobile 4 à laquelle sont rattachées les têtes des vérins 6 de déplacement du capot coulissant 2.

Les parties fixe 3 et amovible 4 du cadre avant 105 sont rattachées structurellement l'une à l'autre de façon détachable, au moyen d'une ou deux goupilles de liaison à démontage rapide 7, montées chacune dans un logement 15 en face de chaque vérin 6.

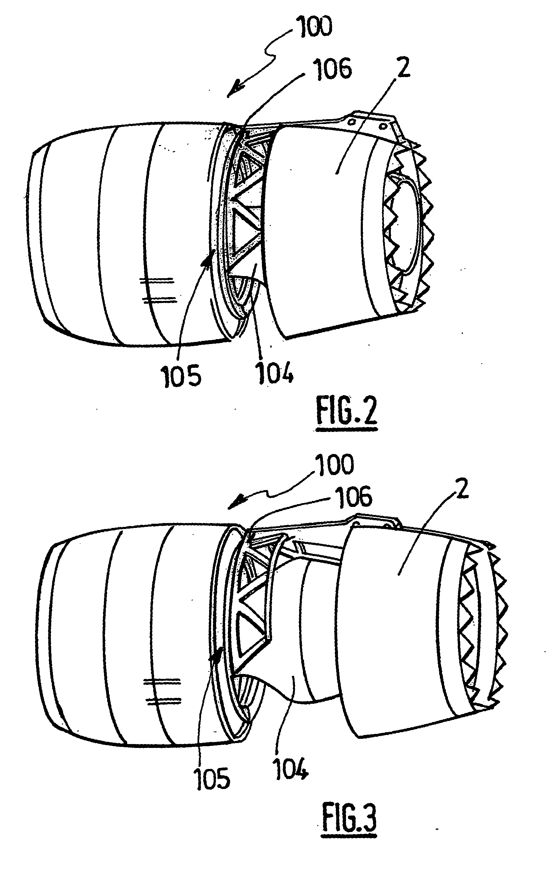

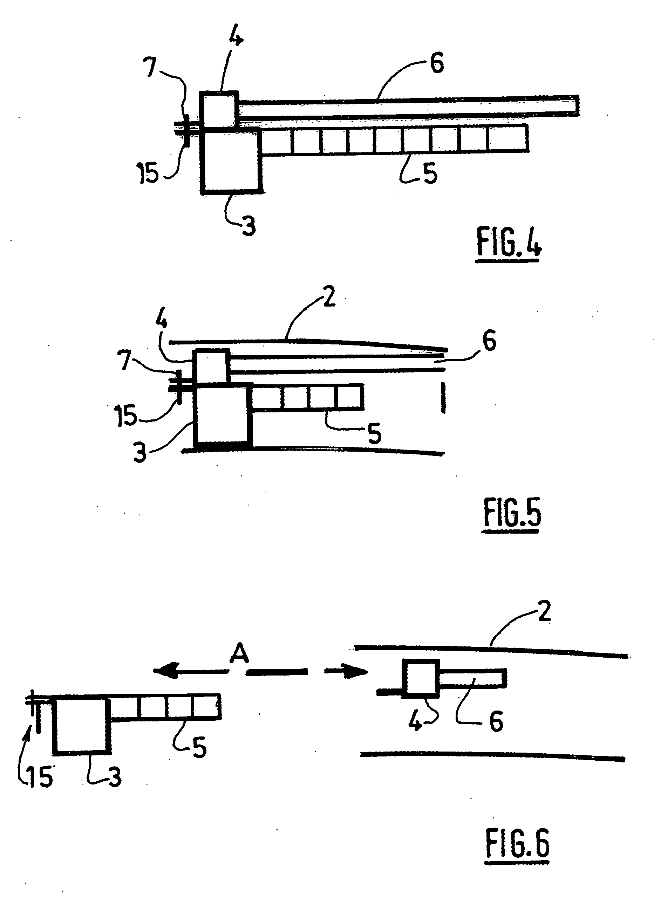

Une fois les parties fixe 3 et amovible 4 du cadre avant détachées, un ensemble formé par le capot coulissant 2, les vérins 6 et la partie amovible 4 du cadre avant peut être déplacé en translation vers l'aval, d'une configuration de fonctionnement (voir figures 2 et 5) vers une configuration de maintenance (voir figures 3 et 6).

Pour se faire, les rails de guidage en translation du capot coulissant 2 sont bien entendu suffisamment longs pour permettre d'atteindre la longueur de dégagement requise pour les opérations de maintenance.

Avantageusement, pour effectuer ce déplacement selon la direction A, la partie fixe 3 du cadre de capotage est équipée d'un moteur électrique 8 (voir figure 4) prévu pour actionner deux pignons 9a et 9b qui engrènent chacun avec une crémaillère 10a ou 10b solidaire de l'ensemble capot coulissant 2 / partie amovible 4.

En l'espèce, le capot coulissant 2 est formé de deux demi-capots hémicylindriques 2a et 2b, disposés de part et d'autre d'un mât ou pylône 1 de l'avion et translatables parallèlement à ce dernier par l'une ou l'autre des crémaillères 10a et 10b.

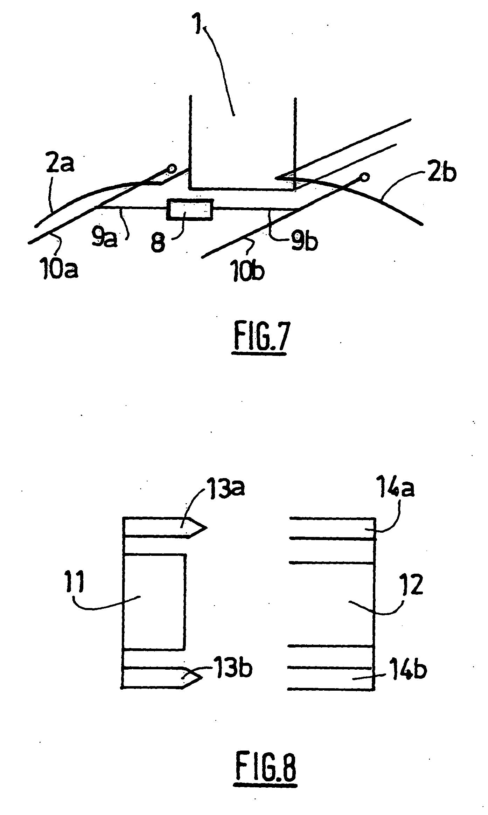

Des câbles (non représentés) de commande des vérins 6, destinés à transiter entre la partie fixe 3 du cadre du capotage et l'ensemble formé par le capot coulissant 2 et la partie amovible 4 du cadre de capotage, comportent un système de connexion et déconnexion automatique (voir figure 8) revêtant la forme d'un couple de connecteurs mâle 12 et femelle 11 prévu sur le cadre du capotage, l'un solidaire de la partie fixe 3 et l'autre de la partie amovible 4 du cadre du capotage.

Les connecteurs mâle 12 et femelle 11 sont disposés parallèlement à la direction A de translation de l'ensemble capot coulissant 2 / partie amovible 4, de sorte que le dégagement ou l'engagement en configuration de fonctionnement de cet ensemble 2/4 s'accompagne respectivement d'une déconnexion ou d'une connexion entre les connecteurs mâle 12 et femelle 11.

Le connecteur femelle 11 présente des logements latéraux 14a et 14b prévus pour recevoir des broches latérales de guidage en translation 13a et 13b du connecteur mâle 12. L'extrémité des broches 13a et 13b est pointue pour faciliter leur engagement dans leurs logements respectifs 14a, 14b, et guider ainsi la connexion entre les connecteurs mâle 12 et femelle 11.

Le connecteur femelle 11 est équipé de portes de protection étanche (non représentés) pouvant pivoter automatiquement entre une position fermée - lorsque l'ensemble capot coulissant 2 / partie amovible 4 se dégage de sa configuration de fonctionnement (translation vers l'aval) - et une position ouverte - quand l'ensemble capot coulissant 2 / partie amovible 4 s'engage en configuration de fonctionnement (translation vers l'amont).

Un dispositif tendeur (non représenté), du type à rail et poulie, permet de maintenir tendus le ou les dits câbles de commande tout en leur laissant assez de "mou" pour accompagner le déplacement de l'ensemble capot coulissant 2 / partie amovible 4.

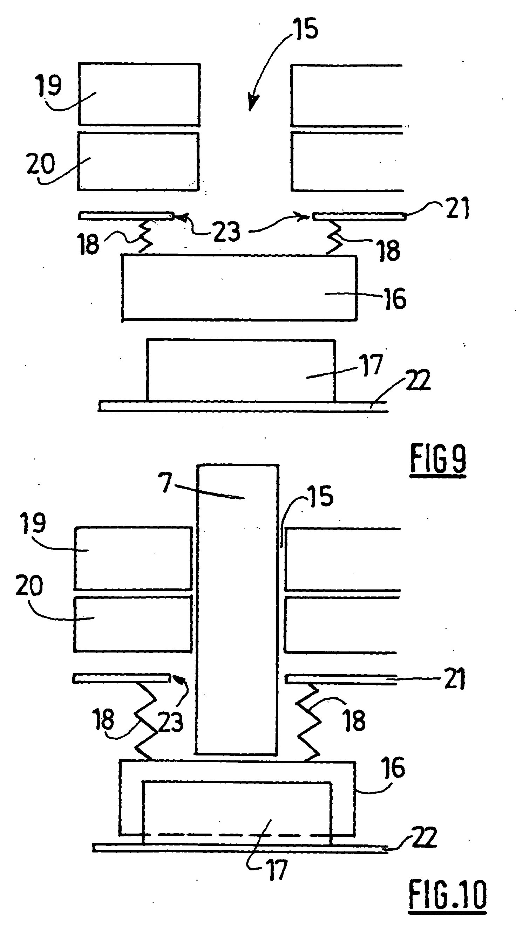

Comme illustré sur les figures 9 et 10, le logement 15 de la goupille de liaison 7 est prévu au niveau de charnières 19 et 20 des parties fixe 3 et amovible 4 du cadre de capotage.

Un couple de connecteurs mâle 17 et femelle 16, orienté radialement perpendiculairement à la direction A, est associé à la mise en place ou au retrait de chaque goupille de liaison 7 hors de son logement 15.

Le connecteur femelle 16 est monté mobile en translation axiale au fond du logement 15 de sorte que la goupille 7, engagée dans son logement 15, vienne en appui contre le connecteur 16 femelle de manière à le pousser vers une position basse de connexion.

Le connecteur mâle 17 est solidaire d'une tôle 22 liée à la partie amovible 4 du cadre de capotage.

Le connecteur femelle 16 est lié à une tôle 21, solidaire de la partie fixe 3 du cadre de capotage, par l'intermédiaire de deux ressorts de rappel 18 disposés de part et d'autre d'un perçage 23 réalisé dans la tôle 21 en regard du logement 15 et qui expose le connecteur femelle 16 au fond du logement 15.

Les ressorts 18 rappellent le connecteur femelle 16 dans une position haute en retrait (voir figure 9).

La goupille 7, mise en place dans son logement 15 (voir figure 10), traverse le perçage 23 et vient pousser le connecteur femelle 16 en connexion avec le connecteur mâle 17, à l'encontre de l'action de rappel des ressorts 18.

L'invention facilite les opérations de maintenance sur le moteur ou sur une structure interne de la structure aval, dite "Inner Fixed Structure" (IFS), et elle a aussi pour avantage d'être compatible avec une structure dite en "O duct" ou avec une structure à grilles de déviation fixes.

En particulier, le cas d'une structure O-duct, permet un gain de masse important par la suppression totale ou partielle des verrous situés à six heures, des poutres situées à douze et six heures, d'un moyen de levage en maintenant, voire des bifurcations situées à douze et six heures. Les rails eux-mêmes peuvent être inscrits directement dans le pylône ou mât. La structure O-duct peut également permettre un gain en traînée aérodynamique et une réduction de diamètre de la soufflante.

La structure mobile selon l'invention peut utiliser pour se translater en position de maintenance, le même rail que celui utilisé pour son ouverture et sa fermeture en mode inverseur de poussée. De cette manière, il est simplement nécessaire de rallonger légèrement les rails et non d'en prévoir de nouveaux, ce qui permet un gain de masse appréciable.

La présente invention présente également un avantage en terme de sécurité pour les opérateurs de maintenance. En effet, dans une configuration selon l'art antérieur, l'opérateur effectuant la maintenance se trouve sous le capot inverseur, qui en cas de rupture des moyens de levage peut se refermer brutalement et blesser l'opérateur. Avec une configuration selon l'invention, aucune structure de peut tomber sur l'opérateur.

Par ailleurs, l'invention est également compatible avec différent mode de support du turboréacteur et de la nacelle par le pylône. Ce support pourra être soit direct entre le turboréacteur et le pylône, soit par le biais de la structure interne fixe, soit par le biais de la structure externe fixe, ce dernier cas étant celui représenté sur les figures 1 à 3 pour illustrer la présente demande.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Inverseur de poussée à grilles (5) pour turboréacteur destiné à former au moins une partie d'une section aval (103) d'une nacelle (100) abritant le turboréacteur, comportant un cadre avant (105) destiné à être rattaché à une partie fixe (102) de la nacelle et supportant, d'une part, des vérins (6) d'actionnement en translation d'au moins un capotage mobile (2), et d'autre part, des grilles (5) d'inversion de poussées périphériques, **caractérisé en ce que** le cadre ayant (105) comprend une partie fixe (3) destinée au rattachement du cadre avant (105) à la partie fixe (102) de la nacelle (100) et supportant les grille (5) de déviation, et une partie (4) montée mobile en translation le long d'un axe longitudinal de la nacelle (100) et sur laquelle est fixée une extrémité des vérins (6) d'actionnement du capotage mobile (2) fixes (3) et mobile (4) du cadre avant (105) étant aptes à être liées entre elles de manière détachable par des moyens de verrouillage (7, 15).

2. Inverseur de poussée selon la revendication 1, **caractérisé en ce que** les grilles (5) de déviation sont supportées par l'intermédiaire d'un treillis (106).

3. Inverseur de poussée selon l'une quelconque des revendications 1 ou 2, **caractérisé en ce que** le capotage mobile (2) est équipé de moyens (8, 9a, 9b, 10a, 10b) d'entraînement en translation de l'ensemble formé par le capotage mobile (2) et la partie amovible (4) du cadre avant (105).

4. Inverseur de poussée selon la revendication 3, **caractérisé en ce que** lesdits moyens d'entraînement en translation sont du type à pignon (9a, 9b) et crémaillère (10a, 10b).

5. Inverseur de poussée selon l'une des revendications 1 à 4, **caractérisé en ce qu'**il est prévu un dispositif tendeur, du type à rail et poulie, pour au moins un câble de commande ou d'alimentation destiné à transiter entre la partie fixe (3) du cadre avant (105) et l'ensemble formé par le capotage mobile (2) et la partie amovible (4) du cadre avant (105).

6. Inverseur de poussée selon l'une des revendications 1 à 5, **caractérisé en ce qu'**au moins un couple de connecteurs mâle (12, 17) et femelle (11, 16) est prévu sur le cadre avant (105), l'un solidaire de la partie fixe (3) et l'autre de la partie amovible (4) du cadre avant (105), de sorte que lesdits connecteurs mâle (12, 17) et femelle (11, 16) atteignent une position de mutuelle correspondance, voire de connexion, lorsque l'ensemble formé par le capotage mobile (2) et la partie amovible (4) du cadre avant (105) est engagé en configuration de fonctionnement.

7. Inverseur de poussée selon la revendication 6, **caractérisé en ce que** lesdits connecteurs mâle (12) et femelle (11) sont disposés parallèlement à la direction (A) de translation de l'ensemble formé par le capotage mobile (2) et la partie amovible (4) du cadre avant (105), de sorte que le dégagement ou l'engagement en configuration de fonctionnement de cet ensemble s'accompagne respectivement d'une déconnexion ou d'une connexion entre lesdits connecteurs mâle (12) et femelle (11).

8. Inverseur de poussée selon la revendication 7, **caractérisé en ce que** l'un au moins parmi lesdits connecteurs mâle (12) et femelle (11) est équipé de moyens (13a, 13b, 14a, 14b) de guidage en translation parallèlement à la direction (A) de translation de l'ensemble formé par le capotage mobile (2) et la partie amovible (4) du cadre avant (105)

9. Inverseur de poussée selon la revendication 7 ou 8, **caractérisé en ce que** le connecteur femelle (11) est équipé de portes de protection étanche susceptibles de pivoter automatiquement entre, respectivement, une position fermée et une position ouverte selon que l'ensemble formé par le capotage mobile (2) et la partie amovible (4) du cadre avant (105) est, respectivement, dégagé ou engagé en configuration de fonctionnement.

10. Inverseur de poussée selon la revendication 6, **caractérisé en ce que** lesdits connecteurs mâle (17) et femelle (16) sont disposés perpendiculairement à la direction (A) de translation de l'ensemble formé par le capotage mobile (2) et la partie amovible (4) du cadre avant (105) et **en ce que** l'un ou l'autre desdits connecteurs mâle et femelle (16) est monté mobile en translation axiale au fond d'un logement (15) prévu pour une goupille (7) de liaison entre les parties fixe (3) et amovible (4) du cadre avant (105) , de sorte que la goupille (7), engagée dans son logement (15), vienne en appui contre ledit connecteur (16) de manière à le pousser vers une position basse de connexion, ledit connecteur (16) étant lié (en 21) à la partie fixe (3) du cadre avant (105) et rappelé dans une position haute en retrait par l'intermédiaire de moyens élastiques de rappel (18).

11. Inverseur de poussée selon l'un des revendications 1 à 10, **caractérisé en ce que** la partie fixe (3) du cadre avant (105) est montée pivotante, autour d'une charnière parallèle à la direction (A) de translation du avant (105) (2), entre une position fermée et une position déployée de maintenance.

## Claims

1. A cascade-type turbojet engine thrust reverser (5) designed to form at least part of a downstream section (103) of a nacelle (100) housing the turbojet engine, including a front frame (105) designed to be attached to a stationary part (102) of the nacelle and bearing cylinders (6) for translating at least one mobile cowling (2) on the one hand, and peripheral thrust reverser vanes (5) on the other hand, **characterized in that** the front frame (105) comprises a stationary part (3) designed to attach the front frame (105) to the stationary part (102) of the nacelle (100) and supporting the cascade vanes (5), and a part (4) mounted such that it can be translated along a longitudinal axis of the nacelle (100) and on which one end of the cylinders (6) for actuating the moving cowling (2) is fastened, the stationary (3) and moving (4) parts of the front frame (105) being able to be detachably connected to one another using locking means (7, 15).

2. The thrust reverser according to claim 1, **characterized in that** the cascade vanes (5) are borne by a lattice (106).

3. The thrust reverser according to any one of claims 1 or 2, **characterized in that** the moving cowling (2) is equipped with means (8, 9a, 9b, 10a, 10b) for translating the assembly formed by the moving cowl (2) and the removable part (4) of the front frame (105).

4. The thrust reverser according to claim 3, **characterized in that** said translating means are of the type including a pinion (9a, 9b) and rack (10a, 10b).

5. The thrust reverser according to one of claims 1 to 4, **characterized in that** it is provided with a stretching device, of the type with a rail and pulley, for at least one control or power cable designed to run between the stationary part (3) of the front frame (105) and the assembly formed by the moving cowling (2) and the removable part (4) of the front frame (105).

6. The thrust reverser according to one of claims 1 to 5, **characterized in that** at least one pair of male (12, 17) and female (11, 16) connectors is provided on the front frame (105), one secured to the stationary part (3) and the other to the removable part (4) of the front frame (105), such that said male (12, 17) and female (11, 16) connectors reach a position of mutual correspondence, or connection, when the assembly formed by the moving cowling (2) and the removable part (4) of the front frame (105) is engaged in the operating configuration.

7. The thrust reverser according to claim 6, **characterized in that** said male (12) and female (11) connectors are arranged parallel to the direction (A) of translation of the assembly formed by the moving cowling (2) and the removable part (4) of the front frame (105), such that the release or engagement of said assembly in the operating configuration is respectively accompanied by a disconnection or connection between said male (12) and female (11) connectors.

8. The thrust reverser according to claim 7, **characterized in that** at least one among the male (12) and female (11) connectors is equipped with translational guiding means (13a, 13b, 14a, 14b) parallel to the direction (A) of translation of the assembly formed by the moving cowling (2) and the removable part (4) of the front frame (105).

9. The thrust reverser according to claim 7 or 8, **characterized in that** the female connector (11) is equipped with sealed protective doors capable of pivoting automatically between a closed position and an open position, respectively, depending on whether the assembly formed by the moving cowling (2) and the removable part (4) of the front frame (105) is respectively released or engaged in the operating configuration.

10. The thrust reverser according to claim 6, **characterized in that** said male (17) and female (16) connecters are arranged perpendicular to the direction (A) of translation of the assembly formed by the moving cowling (2) and the removable part (4) of the front frame (105), and **in that** one or the other of said male and female connectors (16) is mounted axially translatably at the bottom of a housing (15) provided for a connecting pin (7) between the stationary (3) and removable (4) parts of the front frame (105), such that the pin (7), engaged in its housing (15), bears against said connector (16) so as to push it toward a lower connecting position, said connector (16) being connected (at 21) to the stationary part (3) of the front frame (105) and recalled to an upper withdrawn position using elastic return means (18).

11. The thrust reverser according to one of claims 1 to 10, **characterized in that** the stationary part (3) of the front frame (105) is mounted pivoting around a hinge parallel to the direction (A) of translation of the moving cowling (2), between a closed position and a deployed maintenance position.

## Patentansprüche

1. Schubumkehr mit Gittern (5) für ein Turbotriebwerk, die dazu bestimmt ist, mindestens einen Abschnitt eines unterstromigen Sektors (103) einer Gondel (100) zu bilden, die das Turbotriebwerk aufnimmt, einen vorderen Rahmen (105) aufweisend, der dazu bestimmt ist, an einen starren Abschnitt (102) der Gondel angeschlossen zu sein und einerseits Betätigungszylinder (6) trägt, um mindestens eine mobile Abdeckung (2) zu verlagern (2) und andererseits periphere Schubumkehrgitter (5), **dadurch gekennzeichnet, dass** der vordere Rahmen (105) einen starren Abschnitt (3) umfasst, der für den Anschluss des vorderen Rahmens (105) an den starren Abschnitt (102) der Gondel (100) bestimmt ist und Umlenkgitter (5) trägt und andererseits einen entlang einer Längsachse der Gondel (100) mobil verlagernd montierten Abschnitt (4) und auf dem ein Ende der Betätigungszylinder (6) der mobilen Abdeckung (2) befestigt ist, wobei der starre (3) und der mobile (4) Abschnitt des vorderen Rahmens (105) imstande sind, durch Verriegelungsmittel (7, 15) lösbar miteinander verbunden zu sein.

2. Schubumkehr nach Anspruch 1, **dadurch gekennzeichnet, dass** die Umlenkgitter (5) von einem Gitterwerk (106) gestützt werden.

3. Schubumkehr nach einem der Ansprüche 1 oder 2, **dadurch gekennzeichnet, dass** die mobile Abdeckung (2) mit Antriebsmitteln (8, 9a, 9b, 10a, 10b) ausgestattet ist, die die Gruppe, die von der mobilen Abdeckung (2) und dem bewegbaren Abschnitt (4) des vorderen Rahmens (105) gebildet wird, verlagern.

4. Schubumkehr nach Anspruch 3, **dadurch gekennzeichnet, dass** die verlagernden Antriebsmittel vom Typ mit Zahnrad (9a, 9b) und Zahnstange (10a, 10b) sind.

5. Schubumkehr nach einem der Ansprüche 1 bis 4, **dadurch gekennzeichnet, dass** eine Spannvorrichtung vom Typ mit Schiene und Rolle für mindestens ein Steuer- oder Versorgungskabel vorgesehen ist, das dazu bestimmt ist, zwischen dem starren Abschnitt (3) des vorderen Rahmens (105) und der Gruppe, die von der mobilen Abdeckung (2) und dem bewegbaren Abschnitt (4) des vorderen Rahmens (105) gebildet wird, zu wandern.

6. Schubumkehr nach einem der Ansprüche 1 bis 5, **dadurch gekennzeichnet, dass** mindestens ein Paar männlicher (12, 17) und weiblicher (11, 16) Verbinder auf dem vorderen Rahmen (105) vorgesehen ist, wobei das eine mit dem starren Abschnitt (3) und das andere mit dem bewegbaren Abschnitt (4) des vorderen Rahmens (105) verbunden ist, so dass der männliche (12, 17) und weibliche (11, 16) Verbinder eine Position der gegenseitigen Übereinstimmung und sogar des Anschlusses erreichen, wenn sich die Gruppe, die von der mobilen Abdeckung (2) und dem bewegbaren Abschnitt (4) des vorderen Rahmens (105) gebildet wird, in Betriebskonfiguration eingreift.

7. Schubumkehr nach Anspruch 6, **dadurch gekennzeichnet, dass** der männliche (12) und weibliche (11) Verbinder parallel zur Verlagerungsrichtung (A) der Gruppe, die von der mobilen Abdeckung (2) und dem bewegbaren Abschnitt (4) des vorderen Rahmens (105) gebildet wird, angeordnet sind, so dass das Lösen oder Eingreifen in Betriebskonfiguration dieser Gruppe jeweils von einem Lösen oder einer Verbindung des männlichen (12) und weiblichen (11) Verbinders begleitet wird.

8. Schubumkehr nach Anspruch 7, **dadurch gekennzeichnet, dass** mindestens einer der männlichen (12) und weiblichen (11) Verbinder mit Führungsmitteln (13a, 13b, 14a, 14b) für eine Verlagerung parallel zur Verlagerungsrichtung (A) der Gruppe, die von der mobilen Abdeckung (2) und dem bewegbaren Abschnitt (4) des vorderen Rahmens (105) gebildet wird, ausgestattet ist.

9. Schubumkehr nach Anspruch 7 oder 8, **dadurch gekennzeichnet, dass** der weibliche Verbinder (11) mit Türen zum dichten Schutz ausgestattet ist, die automatisch zwischen einer geschlossenen Position und einer geöffneten Position schwenken, je nachdem, ob sich die Gruppe, die von der mobilen Abdeckung (2) und dem bewegbaren Abschnitt (4) des vorderen Rahmens (105) gebildet wird, jeweils in Betriebskonfiguration eingreift oder nicht.

10. Schubumkehr nach Anspruch 6, **dadurch gekennzeichnet, dass** die männlichen (17) und weiblichen (16) Verbinder senkrecht zur Verlagerungsrichtung (A) der Gruppe, die von der mobilen Abdeckung (2) und dem bewegbaren Abschnitt (4) des vorderen Rahmens (105) gebildet wird, angeordnet sind und dass der eine oder der andere der männlichen und weiblichen Verbinder (16) axial verlagerbar bewegbar auf dem Boden einer Aufnahme (15) montiert ist, die für einen Verbindungsstift (7) zwischen dem starren (3) und dem bewegbaren (4) Abschnitt des vorderen Rahmens (105) derart vorgesehen ist, dass der Stift, (7) in seiner Aufnahme (15) den Verbinder (16) derart stützt, das er in eine niedrige Verbindungsposition gedrückt wird, wobei der Verbinder (16) (in 21) mit dem starren Abschnitt (3) des vorderen Rahmens (105) verbunden ist und mit elastischen Rückholmitteln (18) in eine hohe Rückzugposition zurückgerufen wird.

11. Schubumkehr nach einem der Ansprüche 1 bis 10, **dadurch gekennzeichnet, dass** der starre Abschnitt (3) des vorderen Rahmens (105) schwenkbar um ein Scharnier parallel zur Verlagerungsrichtung (A) der mobilen Abdeckung (2) zwischen einer geschlossenen Position und einer geöffneten Wartungsposition montiert ist.
